# EUROPÄISCHE PATENTSCHRIFT

(11) **EP 1 232 121 B1**
(45) Veröffentlichungstag und Bekanntmachung des Hinweises auf die Patenterteilung: **11.08.2004**
(21) Anmeldenummer: 00960586.6
(22) Anmeldetag: 02.09.2000
(51) Int. Cl.: C02F 1/72

(54) **VERFAHREN ZUR REDUZIERUNG VON SCHADORGANISMEN IN WASSERSTRÖMEN**
METHOD OF REDUCING HARMFUL ORGANISMS IN CURRENTS OF WATER
PROCEDE DE REDUCTION D'ORGANISMES NOCIFS DANS DES COURANTS D'EAU

(30) Priorität: 24.11.1999 DE 19956348
(43) Veröffentlichungstag der Anmeldung: 21.08.2002
(73) Patentinhaber: Degussa AG, 40474 Düsseldorf (DE)
(72) Erfinder: SCHNEIDER, Roland, D-63594 Hasselroth (DE); WALZER, Egon, D-63477 Maintal (DE); STEINER, Norbert, D-63755 Alzenau (DE)
(86) Internationale Anmeldenummer: PCT/EP2000/008579
(87) Internationale Veröffentlichungsnummer: WO 2001/038234

(56) Entgegenhaltungen:
- US-A- 5 393 781
- US-A- 5 569 386

## Beschreibung

Die Erfindung richtet sich auf ein Verfahren zur Reduzierung von Schadorganismen aus der Reihe der Algen, Muscheln und Schleimbildnern in kontinuierlich oder periodisch fließenden Wasserströmen, insbesondere Kuhlwasserstromen, umfassend Zugabe eines waßrigen Behandlungsmittels, welches mindestens eine Peroxycarbonsaure mit 1 bis 6 C-Atomen enthält. Die Erfindung richtet sich insbesondere darauf, das Behandlungsmittel in wirtschaftlicher Weise einzusetzen und Betriebsstörungen, wie sie durch das Heranwachsen von Muscheln in vom Wasser durchströmten Rohren und Apparaten auftreten können, sicher zu vermeiden.

In der Industrie und in Kraftwerken wird für Kuhlzwecke Wasser als Kuhlmittel verwendet, wobei das Wasser durch die entsprechenden Kühlanlagen strömt. Aufbau und Umfang der Kühlanlagen, die notwendigen Kuhlwasserbehandlungsverfahren und die anlagebedingten Möglichkeiten konnen von Fall zu Fall sehr unterschiedlich sein. Es wird dabei mit den zur Verfügung stehenden Möglichkeiten versucht, einen möglichst störungsfreien und wirtschaftlichen Kuhlbetrieb aufrechtzuerhalten.

Man unterscheidet die Kühlsysteme u.a. danach, ob das Kühlwasser nur einmal im Durchlauf (Durchlaufkuhlung) oder mehrmals im Umlauf benutzt wird (Umlaufkühlung), wobei im letzteren Falle eine Ruckkühlung des erwarmten Wassers zu erfolgen hat.

Im Falle der Umlaufkühlung kann die Rückkuhlung in offenen Rückkühlern vorgenommen werden, wobei das abzukuhlende Wasser im Gegen-, Quer- oder Kreuzstrom mit Luft in Berührung gebracht wird. Alternativ kann die Ruckkuhlung des Umlaufkuhlwassers in Oberflachenwarmeaustauschern erfolgen, wobei auf der Kuhlseite des Warmeaustauschers mit Durchlauf- oder offener Kreislaufkühlung gearbeitet werden kann.

Im Falle der Durchlaufkuhlung ist wegen der stark unterschiedlich zusammengesetzten Wasserarten, wie Grund-, Fluss-, See-, Meer- und Brackwasser besondere Sorgfalt bei der Auswahl des Behandlungsmittels erforderlich.

Die Anwendung der Durchlaufkuhlung nat haufig den Vorteil, daß im Jahresmittel die Wassertemperaturen niedriger als bei Umlaufkuhlung liegen und daß Anlagekosten für einen Kühlturmbetrieb und eine spezielle Wasseraufbereitung gespart werden können. Das zur Durchlaufkühlung verwendete Wasser muss aber eine Reihe wesentlicher Voraussetzungen erfullen, darunter eine geringe Korrosivität und eine geringe Neigung zur Bildung von Ablagerungen auf mineralischer Basis (scaling), organischer Basis (fouling) oder durch Bewuchs von Mikroorganismen (biofouling).

Das biologische Wachstum in offenen sowie in geschlossenen Kühlkreisläufen führt zu Korrosionsschäden, Verminderung der Warmeübertragung und reduzierter Effizienz der Wärmetauscher. Die Stellen, an denen sich in einem Kühlsystem mikrobiologisches Wachstum störend und schädigend bemerkbar machen kann, sind sehr unterschiedlich. Häufig ist es eine bestimmte Klasse von Mikroorganismen, die an besonderen Stellen der Anlage zu Störungen führt. Deshalb ist es meist erforderlich, den Gesamtkühlwasserstrom schon am Einlauf in das System gegen Schadorganismen zu behandeln. Neben anorganischen Stoffen, wie Sand und Schlamm, die über ein Filter abgetrennt werden, sind meist lebende oder abgestorbene Mikroorganismen, wie Muscheln und Nematoden (Fadenwürmer), und sonstige organische Substanzen verschiedenster Art im für Kühlzwecke zu verwendenden Wasser enthalten.

Algen stellen eine große Gruppe von in Kuhlwasserstromen auftretenden Mikroorganismen dar, die praktisch in jedem offenen Kühlkreislauf an den lichtzuganglichen Stellen anwachsen können. Dichte Überzüge von Algen an Werkstoffoberflachen vermindern die Wirksamkeit von Kühlsystemen und dienen häufig als Nahrstoffquelle für Bakterien, Pilze, Protozoen und Würmer, die in den meisten offenen Kühlsystemen anzutreffen sind. Fallen Teile des Algenbewuchses ab, kann es zur Verstopfung von Rohren, Sieben und Dusen kommen.

Eine große Anzahl von Bakterienarten bildet in Kuhlwassersystemen Schleim, der zu schnell aufbauenden und störenden Belagen oder Verstopfungen führt und die Entwicklung sulfatreduzierender korrosiver Bakterien führt.

Eine weitere Gruppe störender Schadorganismen sind diverse Muschelarten, die bereits im Larvenstadium in Kühlsysteme eingetragen werden und zu immensen Störungen in Kühlkreisläufen der Großindustrie und in Kraftwerken führen können. Außer zu Verstopfungen an Wärmetauscherflächen, Sieben und Dusen führt dieses Muschelwachstum zu Querschnittsverengungen der Rohrleitungen und damit zu Druckanstieg und Energieverlusten. Außerdem müssen die Rohrleitungen in regelmäßigen Abständen aufwendig von Hand gesäubert werden, was zu Betriebsstillstanden und kostenintensiven Maßnahmen führt. Da der sogenannte "Muschelsprung", der Ausstoß von Millionen mikroskopisch kleiner Larven, bereits bei Wassertemperaturen um/unter 8 °C und beschleunigt bei höheren Temperaturen stattfindet, ist eine Behandlung des Kühlwassers erforderlich.

In großen Industriebetrieben wird überwiegend Chlor als Biozid benutzt, dessen Wirkung bekannt ist. Da Chlor sehr reaktionsfreudig ist, geht es auch mit anderen Bestandteilen des Wassers chemische Reaktionen ein, die meist unerwünscht sind und einen wesentlich erhöhten Chlorverbrauch zur Folge haben. Ferner sind viele schleimbildende Mikroorganismen und gewisse Kieselalgen und Grünalgen gegenuber Chlor verhältnismäßig widerstandsfähig. Zudem steigt mit der Erhöhung der Chlordosierung auch die Korrosionsgefahr.

Ozon und Chlordioxid sind zwar zur Behandlung von Kühlwasserströmen vorgeschlagen worden, die Anwendung dieser Mittel erfordert aber einen hohen technischen Aufwand.

Wirksame Mittel zur Behandlung von stehendem und strömendem Wasser zwecks Bekämpfung von Mikroorganismen, wie schleimbildenden Bakterien und Algen, und höheren Schadorganismen, wie Nematoden und Muscheln, sind Wasserstoffperoxid und eine organische niedere Peroxycarbonsaure enthaltende wässrige Lösungen (Produktinformation Degaclean® der DegussaHüls AG (10/99)).

Das US-patent 5,393,781 lehrt ein Verfahren zur Kontrolle der Zebramuschel in wässrigen Systemen, wie in Wasserbehandlungsanlagen in der Industrie und in Kraftwerken. Hierbei wird das Wasser mit einer biozid wirksamen Menge Peroxyessigsäure behandelt. Die Einsatzmenge beträgt mindestens 0,1 ppm, ublicherweise sind aber 10 mg/l und mehr nötig, um eine akzeptable Tötungsrate der Muscheln in ausreichender Zeit zu erzielen. Als Behandlungsmittel wird eine mindestens 1 gew.-%ige Peroxyessigsäurelösung, zweckmäßigerweise eine sogenannte Gleichgewichtsperessigsäure, welche außer Peroxyessigsäure auch Wasserstoffperoxid und Essigsäure enthält, verwendet.

Eine kontinuierliche Dosierung des Behandlungsmittels in das strömende Wasser ist zwar effizient, führt aber zu einem hohen Verbrauch und damit hohen Kosten. Das US-Dokument richtet sich auf die batchweise Behandlung von Wasser, gibt aber keine Anregung, wie kontinuierlich oder zumindest periodisch strömende Wasserströme, wie Kühlwasserströme, wirtschaftlich behandelt werden sollen.

Aufgabe der Erfindung ist demgemäß, ein Verfahren aufzuzeigen, womit die Behandlung von Wasserströmen, wie Kuhlwasserstrome, welche Muscheln und/oder Muschellarven enthalten, in Durchlaufanlagen in wirtschaftlicherer Weise möglich ist.

Gefunden wurde ein Verfahren zur Reduzierung von Schadorganismen aus der Reihe Algen, Muscheln und Schleimbildnern in kontinuierlich oder periodisch fließenden Wasserstromen, insbesondere Kuhlwasserströmen, umfassend Zugabe eines wassrigen Behandlungsmittels enthaltend mindestens eine Peroxycarbonsaure mit 1 bis 6 C-Atomen, das dadurch gekennzeichnet ist, dass man dem strömenden Wasser das Behandlungsmittel einmal alle 5 bis 100 Stunden über einem Zeitraum von 3 bis 60 Minuten in einer Menge entsprechend mindestens 1 ppm Peroxycarbonsaure zudosiert.

Die Unteransprüche richten sich auf bevorzugte Ausführungsformen.

Bei dem Behandlungsmittel handelt es sich bevorzugt um eine wässrige Lösung, welche außer mindestens einer Peroxycarbonsaure die zugrundeliegende Carbonsäure und Wasserstoffperoxid enthält. Bevorzugt befinden sich die Komponenten im Gleichgewicht, und es handelt sich damit um sogenannte Gleichgewichtsperoxycarbonsäuren.

Die Mittel enthalten bevorzugt eine oder mehrere Peroxycarbonsauren aus der Reihe Peroxyameisensaure, Peroxyessigsäure, Peroxypropionsaure, Mono- oder Diperoxybernsteinsäure, Peroxyglutarsäure und Peroxyadipinsaure. Zusätzlich können die Mittel auch längerkettige Peroxycarbonsäuren enthalten, da synergistische Wechselwirkungen bekannt sind.

Besonders bevorzugt enthält das Mittel Peroxyessigsaure und/oder Peroxyameisensäure. Peroxyameisensaure enthaltende Mittel sind leicht durch Zugabe von Ameisensäure zu einer handelsublichen Peroxyessigsaure oder zu einer wassrigen Wasserstoffperoxidlösung erhaltlich.

Der Gehalt an Peroxycarbonsaure(n) in dem zu verwendenden Mittel liegt ublicherweise im Bereich von 1 bis 35 Gew.-%, insbesondere im Bereich von 5 bis 15 Gew.-%.

Dem zu behandelnden strömenden Wasser werden periodisch mindestens 1 ppm, vorzugsweise 2 bis 5 ppm und insbesondere 5 bis 20 ppm, Peroxycarbonsaure zugesetzt.

Die gute antimikrobielle Wirkung des Peroxycarbonsaure enthaltenden Mittels resultiert aus deren Diffusionsfahigkeit durch die Zellmembran. Bedingt durch das hohe Oxidationspotential der Peroxycarbonsaure kommt es in der Folge zu einer irreversiblen Störung des Enzymsystems und damit Abtötung des Mikroorganismus. Der Kontakt mit Muschellarven und Muscheln zu früherem Entwicklungsstadium führt zu einer Schädigung des Gesamtorganismus, so dass die Muschelbildung verhindert wird.

Die Dauer der Zugabe des Mittels und der Zeitabstand der Perioden richten sich nach der Temperatur des Wassers und der Art der Schadorganismen. Bei einer Wassertemperatur um/unter 8 °C ist eine Behandlung von beispielsweise zweimal pro Woche für 5 bis 60 Minuten, insbesondere 15 bis 30 Minuten, zweckmäßig.

In Sommermonaten bei einer Wassertemperatur um/über 12 °C ist eine tagliche Behandlung für 3 bis 60 Minuten, insbesondere 5 bis 30 Minuten, zu empfehlen.

Diese Dosierintervalle stellen sicher, daß der Organismus der Muscheln, welcher innerhalb der ersten 24 Stunden nach dem Muschelsprung noch empfindlich auf mikrobiozide Wirkstoffe reagiert, vor Bildung der schützenden Schale von dem Produkt erreicht wird. 3 Tage nach Auftreten der Larve, ist die Schalenbildung bereits soweit fortgeschritten, daß sich die Muschel selbst gegen im Wasser enthaltene Schadstoffe schutzen kann. Eine Stoßdosierung von Mikrobioziden erweist sich in diesem Entwicklungsstadium als nahezu wirkungslos. Die Dosierung in der Wintersaison hat neben prophylaktischem Charakter auch den Zweck, 'schon geringste Anwachsungen im Vorfeld zu unterbinden. Die erfindungsgemaße Art der Dosierung, also eine periodische Dosierung, ist neben der hohen Wirksamkeit des Mittels auch am wirtschaftlichsten.

Es war nicht vorhersehbar, dass eine periodische Dosierung ausreicht, die Wasserbehandlungsanlage wirksam vor dem Befall von Schadorganismen mit den nachfolgenden Betriebsstorungen zu schutzen.

Das nachfolgende Beispiel verdeutlicht die Erfindung.

### Beispiel

Durchgeführt wurde in einem chemischen Großbetrieb ein Betriebsversuch, wobei in zwei Versuchsapparaturen (Muschelund Algenmonitor) über einen Zeitraum von 6 Wochen Kühlwasser behandelt wurde. Bei dem Kühlwasser handelte es sich um ein Fluß-/Meerwassergemisch. Das Kuhlwasser, welches in der Versuchsanlage temperaturkonstant gehalten wurde, durchströmte zuerst ein Feinfilter, um auszuschließen, daß bereits einige Tage alte Muscheln in das System gelangen konnen. Ebenso wurden dabei Algenbestandteile herausgefiltert. Anschließend durchstromte das Wasser eine Rohrleitung, die mit einem dünnmaschigen Fangkorb, sowie verschiedenenen Lochblechen versehen ist. An diesen Einbauten können sich Muscheln sowie Algen festsetzen und haben damit optimale Wachstumsbedingungen durch gleichmäßige Temperatur, Strömungsgeschwindigkeit, Dunkelheit und Nahrstoffangebot.

Das durch die Versuchsapparatur strömende Kühlwasser wurde zwecks Reduzierung von Schadorganismen mit Gleichgewichtsperessigsaure mit einem Gehalt von 15 Gew.-% Peroxyessigsäure behandelt. Die Zugabemenge betrug jeweils 40 ppm, also 6 ppm Peroxyessigsaure. Dosiert wurde täglich einmal zur gleichen Zeit für einen Zeitraum von 15 Minuten. Wahrend der erfindungsgemaßen Dosierung (26 Tage) sammelten sich im Algen- und Muschelmonitor keine Schadorganismen an.

Bestimmt wurde ferner der Fouling-Faktor, der Aufschluß über den Bewuchs (Schleim und Algen) gibt. Bei erfindungsgemäßer Dosierung über 26 Tage lag der Antifouling-Faktor im Bereich von 0 bis kleiner 5 %. Nach der Dosierung am 26. Tag wurde bis zum 34. Tag die Dosierung ausgesetzt, wobei der Antifouling-Faktor auf 50 % anstieg. Nach erneuter erfindungsgemaßer taglicher Dosierung sank der Antifouling-Faktor wieder ab und erreichte am 42. Tag 0 %.

## Patentansprüche

1. Verfahren zur Reduzierung von Schadorganismen aus der Reihe Algen, Muscheln und Schleimbildnern in kontinuierlich oder periodisch fließenden Wasserströmen, insbesondere Kühlwasserströmen, umfassend Zugabe eines wässrigen Behandlungsmittels, enthaltend mindestens eine Peroxycarbonsäure mit 1 bis 6 C-Atomen, in einer Menge entsprechend mindestens 1 ppm Peroxycarbonsäure,
**dadurch gekennzeichnet,**
**dass** man dem strömenden Wasser das Behandlungsmittel einmal alle 5 bis 100 Stunden über einen Zeitraum von 3 bis 60 Minuten zudosiert.

2. Verfahren nach Anspruch 1,
**dadurch gekennzeichnet,**
**dass** man dem stromenden Wasser das Behandlungsmittel täglich einmal 5 bis 30 Minuten zudosiert.

3. Verfahren nach Anspruch 1 oder 2,
**dadurch gekennzeichnet,**
**dass** man als Behandlungsmittel ein Wasserstoffperoxid und Peroxyessigsäure oder/und Peroxyameisensaure enthaltende wässrige Lösung, insbesondere Gleichgewichtslosung, verwendet.

4. Verfahren nach Anspruch 3,
**dadurch gekennzeichnet,**
**dass** man eine Gleichgewichtsperoxyessigsäure mit einem Gehalt von 5 bis 15 Gew.-% Peroxyessigsäure verwendet.

5. Verfahren nach einem der Anspruche 1 bis 4,
**dadurch gekennzeichnet,**
**dass** das strömende Wasser Kuhlwasser ist.

## Claims

1. Method for reducing harmful organisms such as algae, mussels and slime-forming organisms in continuously or periodically flowing currents of water, in particular cooling water currents, comprising the addition of an aqueous treatment agent, containing at least one peroxycarboxylic acid with 1 to 6 C atoms, in an amount corresponding to at least 1 ppm of peroxycarboxylic acid, **characterised in that** the treatment agent is added to the flowing water once every 5 to 100 hours over a period of 3 to 60 minutes.

2. Method according to claim 1, **characterised in that** the treatment agent is added to the flowing water once a day over a period of 5 to 30 minutes.

3. Method according to claim 1 or 2, **characterised in that** an aqueous solution containing hydrogen peroxide and peroxyacetic acid and/or peroxyformic acid, in particular equilibrium solution, is used as treatment agent.

4. Method according to claim 3, **characterised in that** an equilibrium peroxyacetic acid containing 5 to 15 wt.% of peroxyacetic acid is used.

5. Method according to one of claims 1 to 4, **characterised in that** the flowing water is cooling water.

## Revendications

1. Procédé de réduction des organismes nocifs de la série des algues, des coques et des organismes formateurs de matière visqueuse dans des courants d'eau s'écoulant de manière continue ou périodique, en particulier des courants d'eau de refroidissement, comprenant l'addition d'un agent de traitement aqueux contenant au moins un acide peroxy-carboxylique comportant de 1 à 6 atomes de carbone, en une quantité correspondant à au moins 1 ppm d'acide peroxy carboxylique,
**caractérisé en ce qu'**
on dose dans l'eau qui s'écoule l'agent de traitement une fois toutes les 5 à 100 heures pendant un intervalle de 3 à 60 minutes.

2. Procédé selon la revendication 1,
**caractérisé en ce qu'**
on dose dans l'eau qui s'écoule l'agent de traitement de façon quotidienne une fois pendant 5 à 30 minutes.

3. Procédé selon la revendication 1 ou 2,
**caractérisé en ce qu'**
on utilise comme agent de traitement une solution aqueuse contenant du peroxyde d'hydrogène et de l'acide peroxyacétique et/ou de l'acide peroxyformique, en particulier une solution à l'équilibre.

4. Procédé selon la revendication 3,
**caractérisé en ce qu'**
on utilise un acide peroxyacétique à l'équilibre avec une teneur de 5 à 15 % en poids d'acide peroxyacétique.

5. Procédé selon l'une des revendications 1 à 4,
**caractérisé en ce que**
l'eau qui s'écoule est de l'eau de refroidissement.
